# FASCICULE DE BREVET EUROPEEN

(11) **EP 0 626 549 B1**
(45) Date de publication et mention de la délivrance du brevet: **03.05.2000**
(21) Numéro de dépôt: 94470014.5
(22) Date de dépôt: 18.05.1994
(51) Int. Cl.: F27D 3/15, C21C 5/52, F27B 3/10

(54) **Four à arc électrique d'aciérie et procédé utilisant un tel four**
Metallurgischer Elektrolichtbogenofen und Verfahren mit solcher Einrichtung
Metallurgical electric arc furnace and process using such a furnace

(30) Priorité: 27.05.1993 FR 9306621
(43) Date de publication de la demande: 30.11.1994
(73) Titulaire: SOLLAC S.A., 92800 Puteaux (FR)
(72) Inventeur: Roth, Raoul, F-69100 Villeurbanne (FR)
(74) Mandataire: Ventavoli, Roger

(56) Documents cités:
- EP-A- 0 160 185
- EP-A- 0 429 978
- FR-A- 2 297 916
- FR-A- 2 634 787
- GB-A- 2 192 446
- US-A- 3 527 598
- US-A- 4 444 378
- PATENT ABSTRACTS OF JAPAN vol. 7, no. 167 (C-177) 22 Juillet 1958 & JP-A-58 073 714 (DAIDO TOKUDHUKO KK) 27 Octobre 1981
- PATENT ABSTRACTS OF JAPAN,vol. 12, no 96(C-484), 29 mars 1988 & JP-A-62 228 420

## Description

L'invention concerne le domaine des fours métallurgiques, notamment des fours à arc, dans lesquels on effectue la fusion de matières métalliques ou métallifères et l'affinage et le réchauffage du bain de métal liquide ainsi obtenu. Elle concerne également les fours appelés fours-poches, dans lesquels on n'effectue que le réchauffage et le réglage de la composition d'un bain de métal liquide dont la fusion a été préalablement réalisée dans un autre réacteur métallurgique. Elle s'applique notamment à la sidérurgie.

Lors de l'élaboration de l'acier dans un four électrique à arc, on utilise de plus en plus souvent la technique dite du "laitier moussant". Celle-ci consiste à former en permanence, au sein du laitier qui surnage sur le bain liquide, de multiples petites bulles de gaz qui augmentent considérablement le volume du laitier. Cela peut être réalisé en ajoutant dans le laitier du carbone qui, en réagissant avec les oxydes les plus réductibles du laitier, forme des bulles de CO. On peut également profiter d'une décarburation du bain d'acier liquide : les grosses bulles de CO, en traversant le laitier, entraînent avec elles une pellicule de métal liquide. A l'interface laitier-atmosphère, les bulles éclatent et le métal retourne dans le laitier sous forme de fines gouttelettes. Le carbone qu'elles contiennent réagit avec les oxydes réductibles et forme des petites bulles de CO qui entretiennent le moussage. Cette décarburation du bain peut n'être qu'une conséquence naturelle de sa composition, lorsqu'il présente une forte teneur en carbone et est en contact avec une source d'oxygène (air ambiant, oxydes du laitier). Elle peut aussi être provoquée ou accentuée par une insufflation volontaire d'oxygène au sein du bain liquide au moyen d'une lance plongeant dans le bain et/ou de tuyères implantées dans la sole du four.

Dans un four électrique de fusion à courant alternatif ou continu, l'acier liquide est formé à partir de ferrailles, ou de minerai de fer préréduit ou d'un mélange de tels matériaux. Un laitier moussant y est recherché afin de permettre l'immersion complète de l'arc électrique grâce auquel l'énergie de réchauffage est communiquée au bain liquide. On obtient ainsi un rendement satisfaisant pour le transfert de chaleur entre l'arc électrique produit par la ou les électrodes en graphite et le métal, une usure plus faible des parois du four par le rayonnement de l'arc, et aussi une usure plus faible des électrodes puisqu'il est ainsi possible de maintenir un arc électrique de grande longueur.

Cependant, le moussage du laitier doit être soigneusement contrôlé pour ne pas atteindre des proportions exagérées. C'est en particulier le cas dans les fours électriques de conception moderne dits "fours étanches" (Voir par exemple FR-A-2634787). Dans ces fours, on cherche à limiter autant que possible les entrées d'air extérieur, afin de mieux contrôler la composition de l'atmosphère à l'intérieur du four, la composition et le débit des gaz qui s'en échappent et l'évolution de la composition du bain. Un moussage excessif du laitier risque d'amener celui-ci jusqu'au niveau des organes assurant l'étanchéité entre la paroi latérale et la voûte du four, et de détruire ces organes. Ce risque est particulièrement important lorsqu'on désire élaborer l'acier liquide à partir de matières ferrifères constituées par des minerais de fer préréduits mélangés à d'importantes quantités de matières carbonées. Une telle élaboration conduit, après fusion des matières, à l'obtention d'une fonte ou d'une semi-fonte contenant, par exemple 4 à 5 % de carbone qu'il va falloir ensuite décarburer par injection massive d'oxygène, entraînant inévitablement un moussage intense du laitier.

D'autre part, dans les fours-poches d'aciérie où on ne réalise pas la fusion des matières ferrifères, mais seulement le réchauffage et le réglage de la composition de l'acier liquide, on ne recherche pas le moussage du laitier. Un tel moussage peut cependant se produire accidentellement, lorsque le four-poche travaille sous pression réduite. Si le laitier monte alors jusqu'aux joints assurant l'étanchéité entre la poche et sa voûte, il les détruit et l'installation devient inutilisable.

Le but de l'invention est de proposer un four métallurgique de fusion et/ou de réchauffage du métal dont la conception permette en toute sécurité un moussage important du laitier, que celui-ci soit accidentel ou délibérément recherché.

A cet effet, l'invention a pour objet un four à arc électrique de fusion de matières métallifères et/ou d'élaboration de métal liquide du type dans lequel ledit métal est surmonté par une couche de laitier susceptible d'être affectée par un phénomène de "moussage", ayant les caractéristiques données dans la revendication 2.

L'invention concerne également un procédé d'élaboration de métal liquide utilisant un tel four, tel que défini dans la revendication 1.

Comme on l'aura compris, l'invention consiste à adjoindre à un four métallurgique classique un bac récepteur connecté à la paroi latérale du four et dans lequel le laitier peut se déverser en cas de moussage excessif, avant qu'il n'atteigne la partie supérieure de la paroi du four qui est connectée à la voûte.

L'invention sera mieux comprise à la lecture de la description qui suit et fait référence aux figures suivantes :
- la figure 1 qui schématise, vu en section selon la ligne I-I de la figure 2, un exemple de four électrique d'aciérie à trois électrodes selon l'invention ;
- la figure 2 qui schématise vu de dessus ce même four.

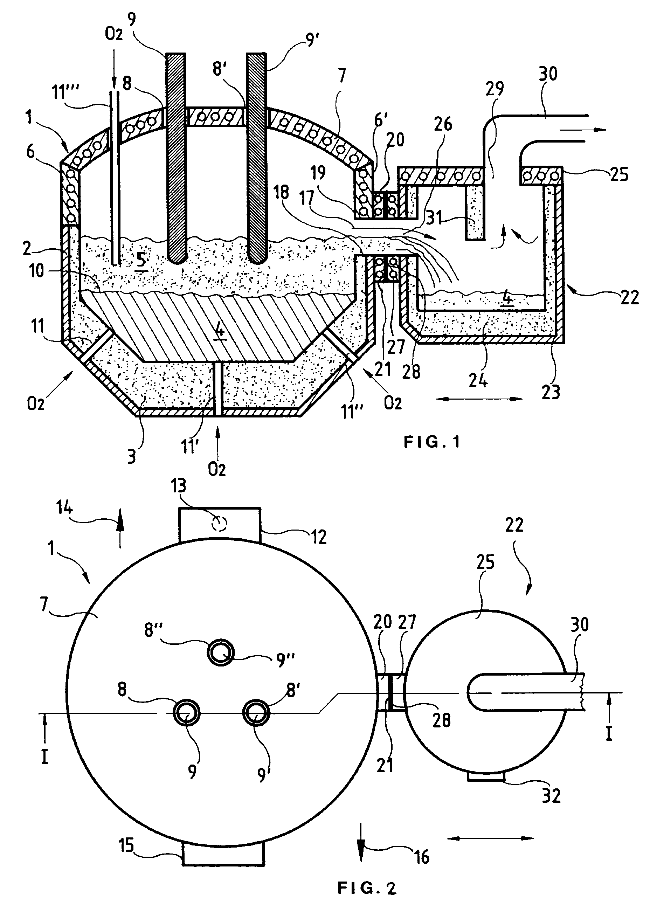

Les figures 1 et 2 montrent un four électrique d'aciérie 1 classiquement composé des éléments suivants. La partie inférieure est constituée par une carcasse métallique 2 revêtue intérieurement par un garnissage réfractaire 3 définissant une cuve destinée à renfermer l'acier liquide 4 et le laitier 5 qui le surmonte. La paroi latérale du four est complétée par une série de panneaux métalliques 6, 6' intérieurement refroidis par une circulation d'eau et fixés au bord supérieur de la carcasse 2. Le four est coiffé par une voûte métallique 7 également refroidie par circulation d'eau, et qui prend appui sur le pourtour supérieur des panneaux 6, 6'. Cette voûte est percée de trois trous 8, 8', 8'' laissant passer trois électrodes en graphite 9, 9', 9'' reliées à une source de courant alternatif non représentée et maintenues par des supports également non représentés. Ces supports permettent de faire varier les distances des extrémités des électrodes par rapport à la surface 10 du métal liquide. Le four 1 est également pourvu de moyens d'insufflation d'oxygène dans le bain métallique 4 qui rendent possible sa décarburation et l'obtention d'un laitier moussant. Sur la figure 1, de tels moyens sont représentés sous forme de trois tuyères 11, 11', 11'' qui traversent la carcasse 2 et le revêtement réfractaire 3 dans le fond du four, et d'une lance 11''' qui traverse la voûte 7 et dont l'extrémité plonge ou non dans le bain liquide.

La cuve du four 1 comporte également un compartiment de coulée 12 dont le fond est percé d'un trou de coulée 13 normalement obturé par un dispositif non représenté tel qu'un clapet ou un busette à tiroir. Au moment de la coulée, le four 1, qui est monté par exemple sur un berceau basculant, est incliné selon la flèche 14 de manière à envoyer progressivement l'acier liquide 4 dans le compartiment de coulée 12, dont le trou 13 est alors ouvert. L'acier liquide 4 peut alors s'écouler hors du four 1 et être recueilli dans une poche de coulée.

A l'opposé du compartiment de coulée 12, le four 1 est également équipé d'une porte de décrassage 15. Lorsqu'elle est ouverte, celle-ci permet aux opérateurs d'avoir accès à la surface 10 du bain d'acier liquide 4 et d'ôter, si nécessaire, la couche de laitier 5 pour le remplacer par un laitier aux propriétés métallurgiques plus favorables. A cet effet, il est possible d'incliner le four 1 selon la flèche 16, c'est-à-dire dans la direction opposée à la direction 14 de l'inclinaison permettant la coulée.

Le four 1 est également équipé de dispositifs classiques non représentés permettant l'introduction d'éléments d'alliage solides dans le bain liquide 4, ou de gaz autres que l'oxygène.

Selon l'invention, le four 1 comporte, dans la partie haute de sa paroi latérale, un orifice 17 de section quelconque, par exemple approximativement circulaire ou rectangulaire. Cet orifice 17 est implanté de préférence de manière à ce que son axe forme un angle droit avec la direction selon laquelle le four 1 peut basculer lors d'une coulée ou d'un décrassage. Dans l'exemple représenté, le bord inférieur 18 de l'orifice 17 est situé dans la zone de la paroi latérale du four 1 qui est constituée par la carcasse métallique 2 revêtue de réfractaire 3. Le bord supérieur 19 de l'orifice 17 est situé dans la zone où la paroi du four 1 est constituée par le panneau refroidi 6'. Cet orifice 17 a son bord inférieur 18 placé de telle manière qu'il constitue un seuil de débordement pour le laitier 5 lorsqu'au cours de son moussage, celui-ci atteint le niveau maximal tolérable. Ce niveau est celui au-delà duquel, si le moussage s'amplifie, il y a un risque de détérioration de la partie supérieure du four (panneaux refroidis 6, 6' et joints d'étanchéité entre les panneaux refroidis 6, 6' et la voûte 7). L'orifice 17 permet donc au laitier 5, par simple débordement, de s'évacuer naturellement du four 1 sans nécessiter l'arrêt de l'opération de moussage et l'intervention des opérateurs chargés de la marche du four 1. Sur la paroi extérieure du four 1, l'orifice 17 est bordé sur tout son pourtour par une pièce 20 dont la face externe définit une portée 21. Cette pièce 20 doit, lors de l'utilisation du four 1, être aussi peu déformable que possible malgré l'intense chaleur de son environnement : elle peut être, par exemple en un matériau métallique et refroidie par circulation interne d'eau, comme représenté.

Toujours selon l'invention, l'installation comporte également un bac 22 destiné à recevoir le laitier 5 lorsqu'une portion de celui-ci s'échappe du four par l'orifice 17. Ce bac peut être constitué, comme représenté, par une cuve métallique 23 revêtue intérieurement par un réfractaire 24, et par une voûte 25 métallique refroidie intérieurement fixée à la cuve 23 ou reposant sur elle de manière aussi étanche que possible. Ce bac 22 comporte à la partie supérieure de sa paroi latérale un orifice 26 dont la géométrie est identique à celle de l'orifice 17 du four . Sur la paroi extérieure du bac 22, l'orifice 26 est bordé sur tout son pourtour par une pièce 27 (par exemple en un matériau métallique refroidi intérieurement) dont la face externe définit une portée 28 correspondant à la portée 21 de la pièce 20 qui entoure l'orifice 17 ménagé dans la paroi latérale du four 1. Ces deux portées 21 et 27, lorsqu'elles sont mises au contact l'une de l'autre, doivent pouvoir être plaquées l'une contre l'autre avec une étanchéité aussi bonne que possible.

La voûte 25 du bac 22 comporte également un orifice 29 sur lequel est connectée une conduite 30 reliée à une installation d'aspiration et de dépoussiérage des gaz non représentée. Cette conduite 30 permet d'évacuer de l'installation les gaz qui se dégagent lors de l'élaboration de l'acier. Elle se substitue, comme représenté ici, ou s'ajoute à la conduite de fonction identique qui, sur les fours d'aciérie classiques, est connectée à la voûte du four.

Le bac 22 est monté dans un berceau non représenté qui permet de rapprocher la bac 22 du four 1 jusqu'à mettre les deux portées 21 et 28 au contact l'une de l'autre avant le début de l'élaboration, et d'éloigner le bac 22 et le four 1 après la fin de l'élaboration. Les deux berceaux peuvent également être solidarisés l'un à l'autre de telle manière que lorsque le four 1 est incliné pour une coulée ou un décrassage, le bac 22 puisse accompagner son mouvement sans qu'il soit nécessaire de rompre le contact entre les portées 21 et 28. Toutefois, si on juge tolérable de rompre ce contact, et donc l'étanchéité de l'installation, pendant les périodes où le four 1 est incliné si celles-ci sont assez courtes, on peut se passer de cette possibilité d'inclinaison simultanée des deux berceaux.

Il peut également être souhaitable d'installer, au voisinage de l'orifice 29 de sortie des gaz du bac 22, des barrages 31 qui entravent le cheminement desdits gaz en leur faisant perdre une partie de leur énergie. On peut ainsi limiter la quantité de poussières transportées par ces gaz vers l'extérieur de l'installation en accentuant le dépôt de ces poussières à l'intérieur du bac 22. Elles y rejoignent alors la fraction du laitier 5 qui a éventuellement débordé du four 1 pendant l'élaboration de l'acier liquide 4.

Après cette élaboration et la coulée hors du four 1 du métal liquide 4 qui en est résulté, le bac 22 est éloigné du four 1 et peut si nécessaire être vidangé, par exemple par basculement ou raclage. On peut prévoir à cet effet une porte 32 sur la paroi latérale de la cuve 22, comparable à la porte de décrassage 15 du four 1.

Il faut éviter que des dépôts de poussières ou de laitier ne provoquent un encrassement excessif des orifices 17 et 26 qui perturberait notamment le fonctionnement optimal de l'installation d'évacuation des gaz. A cet effet, il est préférable que la section de cet orifice soit supérieure à celle de l'orifice 29 de la voûte 25 du bac 21 sur lequel cette installation d'évacuation est connectée.

On a intérêt, en général, à soigner particulièrement l'étanchéité par rapport à l'atmosphère extérieure du bac 22 et de sa connexion au four 1. On vise ainsi à conserver un excellent contrôle de la composition de l'atmosphère surmontant le bain liquide et des gaz que l'on envoie à l'installation de captage et de dépoussiérage des gaz. Si besoin est, on peut prévoir des moyens pour la fixation rigide des portées 21 et 28 l'une contre l'autre pendant que le four est en fonctionnement.

A titre d'exemple, on peut prévoir que le volume intérieur du bac 22 soit d'environ 16 m³ (4 m de long, 2 m de large, 2 m de haut) s'il et associé à un four 1 de capacité 100 t d'acier.

En variante, on peut ne pas prévoir d'installation d'aspiration des gaz 29, 30 connectée au bac 22, et ne connecter celle-ci qu'à la voûte 7 du four 1, comme cela se fait sur les fours classiques. On se priverait ainsi cependant des avantages de la configuration exemplifiée, à savoir une plus grande possibilité de dépoussiérage naturel des gaz dans le bac 22, et aussi une meilleure absorption par l'installation de captage des brusques augmentations du débit gazeux, du fait du grand volume ménagé entre le bain métallique 4 et l'orifice 29 de captation des gaz.

On peut également prévoir non pas un mais une pluralité d'orifices ménagés dans la paroi latérale du four 1 et débouchant dans le bac 22.

L'invention s'applique aux à arc électrique fours métallurgiques, destinés à la fusion de matériaux métallifères et/ou à l'élaboration de métal liquide, dans lesquels on recherche délibérément ou on risque de subir involontairement un moussage du laitier. Elle s'applique tout particulièrement aux fours électriques d'aciérie à courant alternatif ou continu, surtout si ceux-ci sont appelés à assurer la transformation en acier d'un bain de métal liquide initialement très riche en carbone. Elle s'applique également aux fours-poches à arc électrique d'aciérie dans lequel, lors d'un traitement sous vide, peut se produire un moussage inopiné du laitier.

## Revendications

1. Procédé d'élaboration d'un métal liquide, tel que de l'acier, dans un four à arc électrique comportant une cuve renfermant ledit métal liquide et une voûte refroidie par circulation interne d'un liquide de refroidissement et qui coiffe ladite cuve en prenant appui sur le pourtour supérieur de la paroi latérale de ladite cuve, selon lequel on provoque ou subit un phénomène de 〈〈 moussage 〉〉 de la couche de laitier surmontant ledit métal liquide, caractérisé en ce que, dans le but d'éviter d'endommager les parties supérieures du four et les zones d'appui de la voûte par venue à leur contact du laitier moussant, on laisse déborder une fraction dudit laitier moussant dans un bac adjacent audit four à travers au moins un orifice ménagé dans la partie supérieure de la paroi latérale dudit four, ledit bac étant fermé par une voûte et étant connecté au four de manière étanche.

2. Four à arc électrique (1) de fusion de matières métallifères et/ou d'élaboration de métal liquide (4) du type comportant une cuve renfermant ledit métal liquide (4) et une voûte (7) refroidie par circulation interne d'un liquide de refroidissement et qui coiffe ladite cuve en prenant appui sur le pourtour supérieur de la paroi latérale (6, 6') de ladite cuve, caractérisé en ce qu'une paroi latérale dudit four (1) comporte au moins un orifice (17) débouchant dans un bac (22) adjacent coiffé d'une voûte (25) et connecté au four (1) de manière étanche, ledit orifice (17) ayant son bord inférieur (18) placé au niveau maximum tolérable que peut atteindre un laitier moussant (5) sans risquer d'endommager les parties supérieures du four (1) et les zones d'appui de la voûte (7), de manière à permettre un simple débordement dans le bac (22) d'une portion du laitier moussant (5).

3. Four selon la revendication 2, caractérisé en ce que ladite voûte (25) dudit bac (22) est connectée à une conduite (30) d'évacuation des gaz présents dans le four (1) vers une installation de captage et de dépoussiérage desdits gaz.

4. Four selon la revendication 2 ou 3, caractérisé en ce qu'il est constitué par un four électrique à arc d'aciérie.

5. Four selon la revendication 4, caractérisé en ce que ledit métal liquide (4) résulte de la fusion de matières ferrifères mélangées à des matières carbonées, et en ce qu'il comporte des moyens (11, 11', 11'', 11''') pour réaliser la décarburation dudit métal liquide (4).

6. Four selon la revendication 2 ou 3, caractérisé en ce qu'il est constitué par un four-poche d'aciérie.

## Claims

1. Process for the production of a liquid metal, such as steel, in an electric arc furnace comprising a vessel containing the said liquid metal and a vault which is cooled by the internal circulation of a cooling liquid and which caps the said vessel, at the same time bearing on the upper periphery of the side wall of the said vessel, according to which process a phenomenon of the "foaming" of the slag layer surmounting the said liquid metal is caused or experienced, characterized in that, for the purpose of avoiding damaging the upper parts of the furnace and the bearing zones of the vault due to their coming into contact with the foaming slag, a fraction of the said foaming slag is allowed to overflow into a tank adjacent to the said furnace by way of at least one orifice made in the upper part of the side wall of the said furnace, the said tank being closed by a vault and being connected sealingly to the furnace.

2. Electric arc furnace (1) for melting metalliferous substances and/or for producing liquid metal (4), of the type comprising a vessel containing the said liquid metal (4) and a vault (7) which is cooled by the internal circulation of a cooling liquid and which caps the said vessel, at the same time bearing on the upper periphery of the side wall (6, 6') of the said vessel, characterized in that a side wall of the said furnace (1) comprises at least one orifice (17) opening into an adjacent tank (22) capped by a vault (25) and connected sealingly to the furnace (1), the lower edge (18) of the said orifice (17) being placed at the maximum acceptable level which a foaming slag (5) may reach without the risk of damaging the upper parts of the furnace (1) and the bearing zones of the vault (7), so as to allow a simple overflow of a portion of the foaming slag (5) into the tank (22).

3. Furnace according to Claim 2, characterized in that the said vault (25) of the said tank (22) is connected to a conduit (30) for discharging the gases present in the furnace (1) towards a plant for trapping and removing dust from the said gases.

4. Furnace according to Claim 2 or 3, characterized in that it consists of a metallurgical electric arc furnace.

5. Furnace according to Claim 4, characterized in that the said liquid metal (4) results from the melting of ferriferous substances mixed with carbon-containing substances, and in that it comprises means (11, 11', 11'', 11''') for carrying out the decarburizing of the said liquid metal (4).

6. Furnace according to Claim 2 or 3, characterized in that it consists of a metallurgical ladle furnace.

## Patentansprüche

1. Verfahren zum Erzeugen eines flüssigen Metalles, wie Stahl, in einem Elektrolichtbogenofen, der einen das flüssige Metall enthaltenden Schacht und eine Obere Decke aufweist, die durch interne Zirkulation einer Kühlflüssigkeit gekühlt wird und die den Schacht abdeckt, indem sie auf dem oberen Umfangsrand der Seitenwand des Schachtes aufliegt, längs dem das Phänomen einer 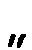 Aufblähung" der das flüssige Metall übersteigenden Schlackenschicht angeregt wird oder abläuft, dadurch gekennzeichnet, dass man zur Vermeidung einer Beschädigung der oberen Bereiche des Ofens und der Anlagezonen der Oberen Decke durch in Kontaktkommen mit der aufblähenden Schlacke ein Teil der aufblähenden Schlacke in einen neben dem Ofen liegenden Trog durch mindestens eine Öffnung überströmen lässt, die in dem oberen Bereich der Seitenwand des Ofens vorgesehen ist, wobei der Trog durch eine Obere Decke abgeschlossen und dicht mit dem Ofen verbunden ist.

2. Elektrolichtbogenofen (1) zum Schmelzen metallhaltiger Materialien und/oder zum Erzeugen eines flüssigen Metalles (4), mit einem das flüssige Metall (4) enthaltenden Schacht und einer Oberen Decke (7), die durch interne Zirkulation einer Kühlflüssigkeit gekühlt wird und die den Schacht abdeckt, indem sie auf dem oberen Umfangsrand der Seitenwand (6, 6') des Schachtes aufliegt, dadurch gekennzeichnet, dass eine Seitenwand des Ofens (1) zumindest eine Öffnung (17) aufweist, die in einen benachbarten Trog (22) mündet, der mit einer Oberen Decke (25) abgeschlossen und dicht mit dem Ofen (1) verbunden ist, wobei der untere Rand (18) der Öffnung (17) auf einem maximalen tolerierbaren Niveau liegt, das durch eine aufblähende Schlacke erreicht werden kann, ohne eine Beschädigung der oberen Bereiche des Ofens (1) und der Anlagezonen der Oberen Decke zu riskieren, indem ein einfaches Überströmen eines Teiles der aufblähenden Schlacke (5) in den Trog (22) erlaubt wird.

3. Ofen nach Anspruch 2, dadurch gekennzeichnet, dass die Obere Decke (25) des Troges (22) mit einer Leitung (30) zum Abzug der in dem Ofen (1) vorhandenen Gase in eine Einrichtung zur Aufnahme und Entstaubung dieser Gase verbunden ist.

4. Ofen nach Anspruch 2 oder 3, dadurch gekennzeichnet, dass er durch einen Elektrolichtbogenofen zur Stahlerzeugung gebildet ist.

5. Ofen nach Anspruch 4, dadurch gekennzeichnet, dass das flüssige Metall (4) aus einer Schmelze von metallhaltigen Materialien gemischt mit kohlenstoffhaltigen Materialien resultiert, und dass Einrichtungen (11, 11', 11'', 11''') vorgesehen sind, um das Dekarbonisieren des flüssigen Metalles (4) durchzuführen.

6. Ofen nach Anspruch 2 oder 3, dadurch gekennzeichnet, dass er durch einen Stahlpfannenofen gebildet ist.
